(19) Europäisches Patentamt
European Patent Office
Office européen des brevets

(11) Publication number: **0 429 701 A1**

# (12) EUROPEAN PATENT APPLICATION

(21) Application number: **89121983.4**

(22) Date of filing: **29.11.89**

(51) Int. Cl.5: **C07C 321/22**, C08F 299/00, C08F 32/08

(43) Date of publication of application:
**05.06.91 Bulletin 91/23**

(84) Designated Contracting States:
**DE FR GB Bulletin**

(71) Applicant: **SHOWA HIGHPOLYMER CO., LTD.**
**No. 20, Kandanishiki-cho 3-chome**
**Chiyoda-ku**
**Tokyo(JP)**

(72) Inventor: **Takiyama, Eiichiro**
**12-4, Nishi Kamakura 4-chome**
**Kamakura City Kanagawa Prefecture(JP)**
Inventor: **Ogura, Ryushi**
**4-3-2, Nakai-machi**
**Takasaki City Gunma Prefecture(JP)**
Inventor: **Harigai, Noriaki**
**781-14, Kawashima**
**Hasuda City Saitama Prefecture(JP)**

(74) Representative: **Vossius & Partner**
**Siebertstrasse 4 P.O. Box 86 07 67**
**W-8000 München 86(DE)**

## (54) Curable resin composition.

(57) Cuarable resin compositions comprising (A) polyene components, and (B) unsaturated alicyclic compounds having thiol groups. The compositions are odorless and also excellent in heat resistance, adhesion properties and mechanical properties compared with conventional polyene-polythiols.

EP 0 429 701 A1

## CURABLE RESIN COMPOSITION

This invention relates to a polyene/thiol type of curable resin composition having a variety of uses, and especially to a resin composition useful in the fields of paints, coatings and adhesives.

It has been well known that a combination of polyene and polythiol components can be cured by adding a photo-reaction initiator thereto (as shown, for example, in Japanese Patent Publication No. 28959/1987).

As polyene components other than those disclosed in said patent, diallyliden pentaerythriol of the following formula, for example has been known (refer to Japanese Publication No. 25574/1987).

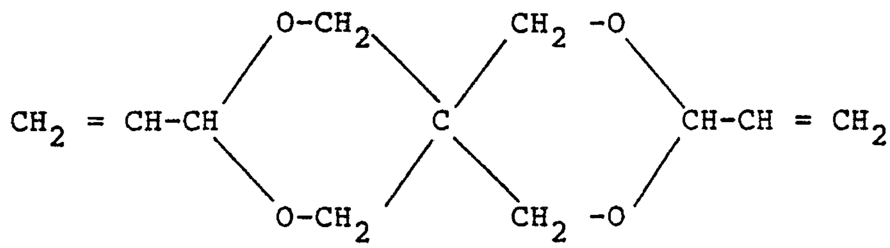

The most undesirable disadvantage of the polyene/thiol type of resin is a mercaptan odor generated from the polythiol which is a fatal obstacle to practical use at the present stage.

Accordingly, the resin is, in fact hardly used in spite of its prominent physical characteristics especially adhesive properties.

An additional disadvantage of the polyene/thiol type of resin, is its relatively poor heat resistance because the bonding structure thereof after curing is an aliphatic thioether one.

It is the object of this invention to remove the practical obstacle due to mercaptan odor that is an disadvantage of said polyene-polythiol type of photo-curable resin as well as to obtain increased heat resistance, adhesive properties and mechanical strength.

This object could be achieved by the surprising finding that such problems as odor and lacking heat resistance can be overcome by providing a resin composition composed of a polymer component comprising (A) an oligomer or a polymer having at least two reactive carbon-carbon double bonds or at least one reactive carbon-carbon triple bond in the molecule, and (B) an unsaturated alicyclic compound having thiol groups.

A preferred embodiment of the inventions is a resin composition comprising a polyene component with a molecular weight of at least 1,000, and an alicyclic compound, as a thiol component, having a thiol group and an alicyclic structure in the molecule, said alicyclic compound being obtained by reacting an unsaturated alicyclic compound having at least two unsaturated bonds in the molecule at least one of said unsaturated bonds being in the ring with a polythiol compound having at least two thiol groups at a proportion where the total number of thiol groups of the polythiol compound is greater than the total number of unsaturated bonds of the unsaturated alicyclic compound .

For a better understanding of this invention, if the invention is illustrated by way of dicyclopentadiene as an unsaturated alicyclic compound and a tetrathiol compound as the polythiol compound, the thiol component (B) of this invention may be shown by the following model:

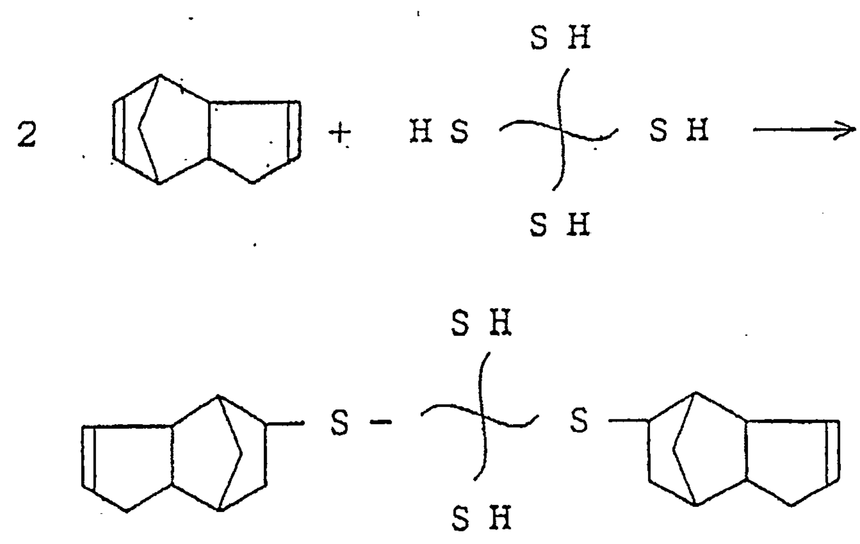

The twc unsaturated bonds of the dicyclopentadiene differ in their reactivities. The unsaturated bond in the ring having an endomethylene structure reacts quickly with the thiol group, whereas the unsaturated bond in the five-membered ring is less reactive. Therefore it is easy to keep a part of the thiol groups unreacted.

Naturally, the reaction between the unsaturated C-C bond and thiol group is conducted by addition of the hydrogen atom of the thiol group to an unsaturated bond . That is, the reaction proceeds along the following formulae.

$\sim HC = CH_2 + HS - \sim \rightarrow$

$\sim CH_2 - CH_2 - S - \sim$

Therefore, at least two thiol groups must be contained in one molecule for polymerization, and the same is true for the unsaturated bonds.

As for the thiol component in this invention, even if the component does not have two thiol groups, it has unsaturated bonds, and it can therefore be used when the unsaturated bonds of the polyene component to be reacted are radically curable, preferably (meth)acryloyl group.

In this case, a competitive reaction will occur between the unsaturated bonds and thiol groups, or between the unsaturated bonds themselves. When the unsaturated bonds in the polyene component are poor in radically curing properties, the thiol component according to this invention needs at least two thiol groups in one molecule.

As for the thiol component according to this invention, the addition between the corresponding polythiol compound and, for example, dicyclopentadiene will provide complete elimination of the mercaptan odor of the thiol compound in spite of the existence of partly residual thiol groups.

In this case, the dicyclopentadiene being the reaction partner of the polythiol compound also has a strong odor and therefore cannot be handled in the open, but the odors of both compounds will dramatically disappear if they are mixed and even partially reacted.

As for unsaturated alicyclic compounds having at least two unsaturated bonds in the molecule as well as at least one of the bonds in the corresponding ring, the commercially available ones all process an unusual odor and can be handled in a manner similar to that for dicyclopentadiene.

On the contrary, polyene compounds with little odor which have at least two of various types of unsaturated bonds, for example as represented by the following general formulae, will not eliminate the mercaptane-like odor of polythiol even when they are used together and reacted with the polythiol.

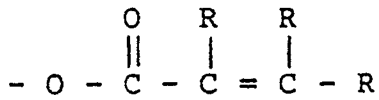 ,

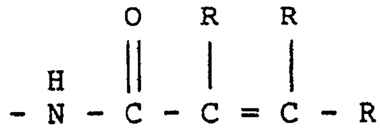 ,

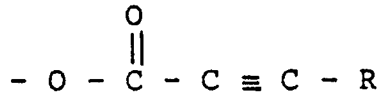 ,

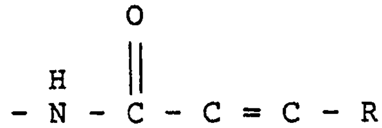 ,

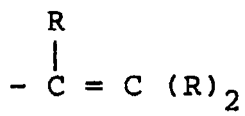 ,

where, R represents a hydrogen atom, phenyl group or alkyl group having 1-9 carbon atoms.

Examples of thiol compounds which can be used for preparing the thiol components used in this invention are polythiols having a molecular weight of at least about 50 and the general formula

Rp-(SH)n

where Rp is a polyvalent organic group, and n is an integer greater than one, or the formula

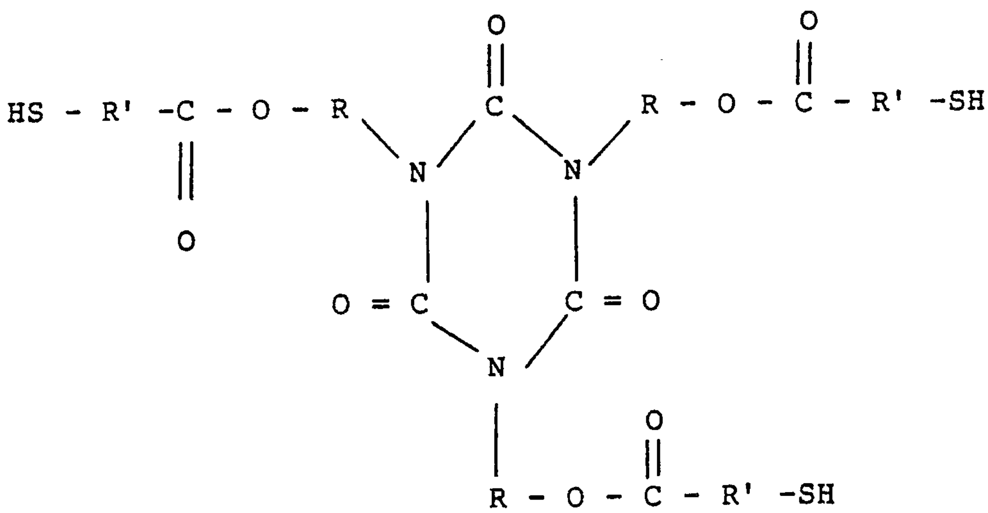

where R and R′ are alkylene groups having 1 to 4 carbon atoms.

A variety of polythiol compounds may suitably be employed.

From the standpoint of odor and physical properties of the final products, products obtained by the esterification of polyols with thioglycolic acid or mercaptopropionic acid are preferred. Specific examples are pentaerythriol tetrathioglycolate, pentaerythriol tetrathiopropionate, trimethylolpropane trithioglycolate, trimethylolpropane trithiopropionate and hexanediol dithiopropionate.

Among them, polythiol compounds being more than divalent are most preferred in view of the

remaining thiol groups after reaction. In addition, bisphenol A and polyvalent thiols having cyanuric or isocyanuric structures are also suitable.

Unsaturated alicyclic compounds for forming thiol components together with said polythiol compounds have at least two unsaturated bonds per molecule at least one of which is in the ring, the most typical one being dicyclopentadiene, which is available at low cost and most preferable for the object of this invention. Besides dicyclopentadiene, the following compounds, for example, can be satisfactorily used.

(I) 5-ethylidenebicylo[2,2,1]hepto-2-ene

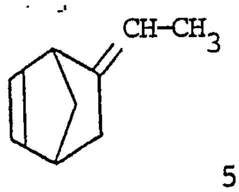

(II) 5-vinylbicylo[2,2,1]hepto-2-ene

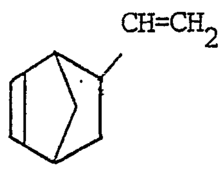

(III) 4-vinyl-1-cyclohexene

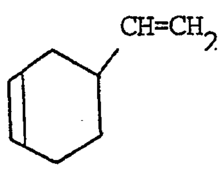

(IV) 3a,4,7,7a-tetrahydroindene

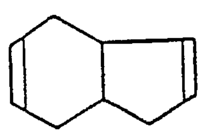

In the literature many compounds such as cyclopentadiene and cyclododecatriene are exemplified. The compound worth using next to dicyclopentadiene is the compound having the above mentioned formula (I), namely 5-ethylidenebicylo[2,2,1]hepto-2-ene, i.e., ethylidene norbonene.

After the reaction between the polythiol compound and the unsaturated alicyclic compound residual thiol groups should be present in the thiol component. Therefore, the reaction must be conducted at a ratio so that the total number of thiol groups in the polythiol compound exceeds the total number of unsaturated bonds in the unsaturated alicyclic compound . As for the actual ratios thereof, proportions of two or more thiol groups to one unsaturated bond are preferred.

Such ratios, however, as stated above depend on the type of polyene components.

The synthesis of the thiol component is carried out by merely mixing the polythiol compound with the unsaturated alicyclic compound and continuing heating or cooling of the mixuture until the necessary addition is realized.

As one component in this invention, the polyene component (A) has a molecular weight of at least 1000, and is an oligomer or polymer (hereinafter referred simply to as polymer) which has at least two reactive carbon-carbon double bonds or at least one reactive carbon/carbon triple bond. The term "reactive bond" as used herein means an unsaturated carbon/carbon bond permitting polymerization or addition reaction with the thiol group. Suitable examples of reactive unsaturated bonds are carbon/carbon double bonds such as in an allyl group, (meth)acrylolyl group, vinyl group and isopropenyl group, and triple bonds such as in a propargyl group (herein referred to simply as unsaturated bond).

As the polyene components used in this invention have a molecular weight of at least 1000, the

components can improve the properties of cured products such as heat resistance, adhesive properties and mechanical strength. Also variation in the skeleton structure of the polymer allows control of the properties of the cured products.

There are various methods for synthesizing the polyene components used in the invention and generally it can be produced by the reaction of polymers having functional groups with unsaturated compounds being reactive to said groups. Variation in the type of the polymers and unsaturated compounds allows control of the properties of the cured products.

For said reactions, considering the ease of reaction, urethane reaction or esterification are preferred. The typical example is the urethane reaction between a polymer having an active hydrogen atom, e.g. a hydroxyl group,and an unsaturated compound having an isocyanate group, or vice versa,the urethane reaction between a polymer having an isocyanate group and an unsaturated monoalcohol. Similarly the polyene component can be synthesized by esterificiation between a polymer and an unsaturated compound which have respectively either one of a hydroxyl or epoxy group and a carboxyl or acid anhydride group.

Examples of the polymers which may be used for the production of the polyenes employed in this invention are polymers having an isocyanate group, acid anhydride group, carboxyl group, hydroxyl group or epoxy group; such as phenoxy resins, saturated or unsaturated alkyd resins, epoxyacrylates, polyester polyols, polyether polyols and ethylene-saponified vinyl acetate copolymers.

A further example is a polymer (a) which is produced by copolymerizing a polymerizable monomer (i) having a carbon/carbon double bond with a polymerizable monomer (ii) having a double bond being polymerizable with said monomer and in addition said functional groups.

If the monomer (i) which forms the backbone chain of the copolymer (a) is a polymerizable monomer having a carbon/carbon double bond, there is no deed for restrictions thereto. For example, styrene, vinyltoluene, chlorostyrene, acrylic esters, methacrylic esters, acrylonitrile, vinyl chloride, vinylidene chloride, vinyl pyrrolidone and vinyl acetate are typical monomers. They can be used singly or as mixture thereof.

The monomer (ii) which has said functional groups being the other component of the copolymer (a) is a copolymer having a functional group such as an isocyanate group, acid anhydride group, carboxyl group, hydroxyl group or epoxy group which can undergo an urethane reaction or an esterification reaction. Among these, as a monomer with an isocyanate group, e.g. isocyanate ethyl methacrylate is given, as a monomer with an acid anhydride group, e.g. maleic anhydride and itaconic anhydride are given, as a monomer with a carboxyl group e.g. acrylic acid and methacrylic acid are given, as a monomer with a hydroxyl group, e.g. unsaturated monoalcohols such as 2-hydroxyethyl acrylate, 2-hydroxypropyl acrylate, 2-hydroxyethyl methacrylate, 2-hydroxypropyl methacrylate, methylolacrylamide are given and as a monomer with an epoxy group , e.g. glycidyl (meth)acrylate and the mono(meth)acrylate of an epoxy resin are given as representive examples.

Further, the unsaturated compound (b), which introduces an unsaturated bond into the polymer (a) having said functional group, is a compound having an unsaturated bond and a reactive group such as a hydroxyl group, epoxy group, isocyanate group or carboxyl group which can undergo an urethane reaction or esterification reaction with the functional group in the polymer (a). As for this compound (b), the following compounds are used depending on the type of functional group in the polymer (a). For example, as for the compound (b) which leads to esterification with an acid anhydride group of the polymer (a), unsaturated alcohols,e.g. 2-hydroxyethyl acrylate or propargyl alcohol as described above are given as for the compound (b) which undergoes esterification with a carboxy group of the polymer (a), an unsaturated monoepoxy compound e.g. glycidyl (meth)acrylate, in particular glycidyl methacrylate or the mono(meth)-acrylate of an epoxy resin are given; as for the compound (b) which undergoes an urethane reaction with the hydroxy group of the polymer (a), an unsaturated isocyanate obtained by the reaction of a polyvalent isocyanate, e.g. a diisocyanate, with a monoalcohol such as 2-hydroxyethyl acrylate is given; and as for the compound (b) which leads to esterification with an epoxy group in the polymer (a), acrylic acid or methacrylic acid are given as examples.

Although it is ideal for an unsaturated isocyanate having said (meth)acryloyl group to have both a (meth)acryloyl group and an isocyanate group, with a view to preventing gelation during reaction, the residual amount of the isocyanate groups in the unsaturated isocyanate be in the range of 0.2-0.9(molar ratio) by reacting not less than one mole of unsaturated monoalcohol with one mole of polyvalent isocyanate (diisocyanate).

For example, an unsaturated alcohol is reacted in an amount of of 1.1 to 1.8 moles with one mole of diisocyanate, and the residual isocyanate groups are used for the reaction with the hydroxy group of the backbone chain of the copolymer (a) obtained from monomers (i) and (ii).

As stated above, various types of polymers may be used as the polyene component (A), among which

side chain-unsaturated polymers having a (meth)acryloyl group in the side chain via an urethane or ester linkage are preferred examples.

Hereinafter, typical examples of the polymer (A) having a (meth)acryloyl group in a side chain and methods of their preparation will be illustrated.

(1) Side chain-unsaturated polymer having a (meth)acryloyl group in a side chain via an urethane linkage.

(I) This type of polymer is described in Japanese patent Laid-open Nos. 230019/1984, 38403/1985 and 109815/1987, as follows:

A curable side chain-unsaturated polymer (A) may be obtained from a copolymer (a) having a hydroxy group in the side chain and an unsaturated isocyanate (b) which is an addition product of a polyvalent isocyanate and an unsaturated monoalcohol having a (meth)acryloyl group and which has free isocyanate groups by reacting the hydroxy groups of (a) with the isocyanate groups of (b).

As a typical example of a polymer containing hydroxyl groups in the side chain, the copolymer (a) of a phenoxy resin and 2-hydroxyethyl(meth)acrylate or 2-hydroxypropyl(meth)acrylate and styrene may be used and the unsaturated isocyanate (b) being an addition product comprising toluylene diisocyanate and 2-hydroxyethyl(meth)acrylate or 2-hydroxypropyl-(meth)acrylate is reacted with said copolymer (a). The resulting polymer containing hydroxy groups in the side chain is the most preferred one.

(II) A curable side chain-unsaturated polymer (A) obtained by reacting the copolymer (a) having hydroxy groups in the side chain with isocyanate ethyl methacrylate (b) can also be employed.

(III) A curable side chain-unsaturated polymer (A) obtained by reacting a copolymer (a) containing an isocyanate group in the side chain produced by polymerizing isocyanate ethyl methacrylate with a vinyl monomer such as styrene or methylmethacrylate, with an unsaturated alcohol (b) having a (meth)acryloyl group can also be used.

(2) Side chain-unsaturated polymer having a (meth)acryloyl group in a side chain via an ester linkage.

(IV) A suitable polymer is a side chain-unsaturated polymer (A) obtained by reacting copolymer (a) having a glycidyl group in the side chain with (meth)acrylic acid (b).

A typical example is a polymer which is produced by reacting (meth)acrylic acid with a copolymer comprising styrene and glycidyl(meth)acrylate with esterification. Also said polymer containing allylglycidyl ether in place of a part of the glycidyl(meth)acrylate is suitably employed.

(V) Another suitable polymer can be obtained by reacting a copolymer (a) containing carboxy groups in the side chain with an unsaturated epoxy compound (b). A typical example is a polymer produced by reacting glycidyl(meth)acrylate with a copolymer comprising styrene and (meth)acrylic acid.

(VI) A polymer obtained according to the method disclosed in Japanese Patent Laid-open No. 258817/1986.

[ Step A] Copolymer (a) which has an epoxy group in the side chain of the polymer is produced by copolymerizing, using a radical polymerization catalyst, a vinyl monomer with a compound containing an unsaturated epoxy resin at least as a component. The epoxy resin comprises a (meth)acryloyl group and an epoxy group in the molecule and is produced by reacting at least one mole of epoxy resin with one mole of (meth)acrylic acid.

[ Step B] To said copolymer (a) is added (meth)acrylic acid (b) in an amount substantially equimolar to the remaining epoxy groups in the reaction mixture obtained in "Step A" for reacting the epoxy groups with the carboxyl groups to produce an unsaturated side chain-polymer (A).

Preferred epoxy resins are the bisphenol type of epoxy resin, novolac type of epoxy resin and alicyclic epoxy resins.

(VII) Unsaturated side chain-polymers are also produced by reacting an unsaturated epoxy resin (b) having both of epoxy and (meth)acryloyl groups obtained by the reaction of (meth)acrylic acid with n epoxy resin with a copolymer (a) containing carboxyl groups in the side chain which is obtained by polymerization of a vinyl monomer with (meth)acrylic acid.

The epoxy resins to be used are the same as those mentioned above.

(VIII) Unsaturated side chain-polymers (A) may also be produced by reacting an unsaturated alcohol (b) having a (meth)acryloyl group with a copolymer (a) containing an acid anhydride group in the side chain.

In a specific example, as a polymer with anhydride groups, a copolymer of styrene with maleic anhydride may be used, and said copolymer is reacted with 2-hydroxyethyl-(meth)acrylate or 2-hydroxypropyl(meth)acrylate to obtain a most preferred corresponding polymer.

In addition, a polymer with no free carboxyl group is also available in this invention, which is obtained

by reacting the free carboxyl group resulting from esterification with a monomer having an epoxy group or both hydroxy and (meth)acryloyl groups.

Conventional methods are employed for the copolymerization reaction, urethane reaction and esterfication reaction to synthesize the polymer (A) in accordance with this invention. For example, for the copolymerization reaction, radical catalysts such as organic peroxides or azo-compounds are employed, and for the esterfication reaction reactive catalysts such as tertiary amines, amine salts, quarternary ammonium salts or metal salts are employed for accelerating the reaction.

The polymer (A) mentioned above, i.e. the polyene component has a molecular weight of at least 1,000, preferably not less than 5000 and preferably not more than 100,000. As for the polymer with a molecular weight of less than 1,000, it will not necessarily have satisfactory curing properties and physical properties, and with more than 100,000, the viscosity will be too high resulting in poor operating performance.

The amount of unsaturated bonds in the polymer (A) is desirably in the range of 1 mole% to 30 mole% and most suitably 5 mole% to 20 mole%.

In addition, polymers such as an unsaturated polyester comprising itaconic acid as one component or a polymer obtained by reacting an unsaturated monobasic acid, e.g. (meth)acrylic acid or crotonic acid with a polymer having an epoxy group at the side chain can be used as the polymer (A) of the present invention.

These polymers and oligomers can be used by dissolving them into a polyfunctional monomer such as trimethylolpropane-diacrylate.

If necessary, the combined use of epoxy resins is also available.

The polyene and thiol components are used together at an equivalent ratio of unsaturated bond to thiol group of 1:0.8-1.2.

In order to cure compositions according to this invention, the combined use of an initiator with light or heat is required.

In general, photo-curing is mainly used, but heat-curing using organic peroxide is also useful in the field of adhesion.

As for the photo-initiators used for the invention, commercially available products are satisfactory. Examples of these initiators there are given benzoin ethers, benzyl ketals, acetophenone derivatives or combinations of amines and aromatic ketones, and combinations of thioxanthone and amines. Examples of organic peroxides used for heat-curing are ketone peroxides, diacyl peroxides, peroxy ketales, hydroperoxides, peroxy esters and peroxy carbonates.

Further, azo compounde can also be employed. The initiator is used in an amount of 0.1-10 parts by wt. preferably of 0.5-5 parts by wt. per 100 parts by wt. of resin composition.

In the composition according to this invention, components such as fillers, reinforcing materials, dyes, pigments and other polymers can be used as needed.

## EXAMPLES:

To aid in the understanding of this invention, the following examples are given.

### EXAMPLE 1

#### Preparation of dicyclopentadiene-thiol addition product (A)

Into a 1-liter separable flask equipped with stirrer, dropping funnel, reflux condenser and thermometer were placed 490g of pentaerythriol tetrathiopropionate and 0.2g of methyl-p-benzoquinone. To the mixture was dropped 132g of dicyclopentadiene. At the same time that the dropping was started, the temperature of the mixture began to rise, so it was cooled to not allow its temperature to become over 60 °C.

After dropping, the mixture was reacted for 2 hours being permitted to increase in temperature up to 80 °C.

From the results of gas chromatograph measurement, it was confirmed that no free dicyclopentadiene was present.

Addition product (A) was produced having a viscosity of about 100 poise and a Harzen color number of 100.

As for the addition product (A), neither the characteristic odor of thiol nor the malodor of dicyclopentadiene were sensed, and therefore this was substantially odorless.

#### Synthesis of unsaturated side chain-bonding type polymer (B)

Into a 1-liter separable flask equipped with stirrer, reflux condenser, thermometer and gas introducing

tubing were placed 200g of phenoxy resin (molecular weight: about 25,000) and 400g of methyl ethyl ketone, and then the contents was dissolved homogeneously into a solution at 60-70° C with stirring.

Then to the solution was added 30g of isocyanate ethyl methacrylate, 0.5g of dibutyltin dilaurate and 0.12g of methyl-p-benzoquinone, and the mixture was then reacted at 70° C for 4 hours. It was determined by infrared spectophotometric analysis that the free isocyanate group had disappeared. A light yellowish brown liquid of unsaturated side chain-bonding type polymer (B) (methyl ethyl ketone solution) was obtained.

50 parts (part by weight, and so on) of addition product (A), 450 parts of polymer (B) and 2 parts of Darocure 1173 made by Merck & Co. as a photo-initiator were mixed, and the mixture was coated to a thickness of 50µm on a copper foil with a thickness of 35 µm, then after air drying the coatings at 60-70° C for 1 hour, was passed through at a rate of 2m/min. beneath 3 ultraviolet lamps having an output of 120w/cm each.

The hardness of the cured coating was H, and the adhesion of coating passed a 360-degree folding test of 100/100 and 1mmØ.

No occurence of blister peeling was confirmed even after 60 sec above a 260° C bath of molten solder.

EXAMPLE 2

Synthesis of unsaturated side chain-bonding type polymer (C)

Into a 3-liter separable flask equipped with stirrer, reflux condenser, thermometer and gas introducing tubing were placed 888g of butyl acrylate, 106g of acrylonitrile, 155g of isocyanate ethyl methacrylate, 893g of ethyl acetate and 11g of azobisisobutyronitrile, and polymerization was carried out for 6 hours in an atmosphere of nitrogen by raising the temperature of the contents along with refluxing ethyl acetate, then 6g of azobisisobutyronitrile was additionally added to perform another 6 hour's polymerization.

The polymerization rate of the polymer obtained reached 96%. The average molecular weight thereof was about 95,000. After stopping the polymerization by adding methyl-p-benzoquinone, 58g of allyl alcohol and 6g of dibutyltin dilaurate were added and the mixture was reacted at 70° C for 6 hours. Then it was concluded by infrared spectrophotometric analysis that free isocyanate groups and hydroxyl groups had disappeared. In addition, the irritating odor of allyl alcohol could not be detected. Also, a light yellowish brown liquid of polymer (C) having an allyl urethane type of unsaturated bond at its side chain was obtained.

210g of polymer (C), 65g of dicyclopentadiene/pentaerythriol tetrathiopropionate addition product (A) used in EXAMPLE 1, and 3g of Irgacure #651 made by Ciba Geigy as a photo-initiator were mixed, and the mixture was coated in a 10mm width on glass plate of 20mm, 20mm, 5mm, followed by air drying at 100° C for 10min., then the glass plates were stacked on their coated faces tc be photo-cured according to the same conditions as in EXAMPLE 1.

An adhesive strength test by compression broke the glass plates at a force of about 70kg/cm$^2$.

EXAMPLE 3

Synthesis of dicyclopentadiene/thiol addition product (D)

Into a 1-liter separable flask equipped with stirrer, reflux condenser and thermometer were placed 400g of isocyanuric tetrathiopropionate (made by Shikoku Fine Co., Ltd.) shown by the next formula

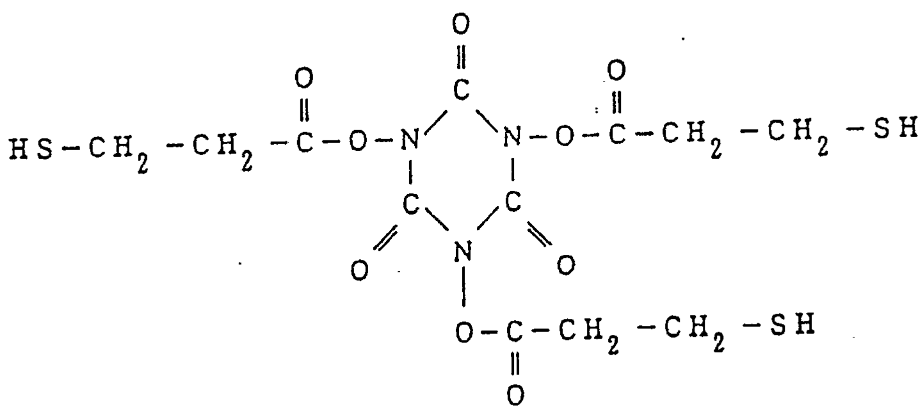

as well as 132g dicyclopentadiene and 0.1g of methyl-p-benzoquinone. The mixture was, at the starting, reacted at not more than 40°C for 2 hours, then additionally at 60-65°C for 2 hours. It was found that the malodor of thiol and the characteristic odor of dicyclopentadiene had disappeared.

The GPC measurement showed that about 90% of the addition product (D) measured had a peak at an average molecular weight of about 580. Therefore, it was recognized that the product was a compound obtained by the addition between dicyclopentadiene and thiol at a molar ratio of 1:1.

A light yellowish brown addition product (D) was obtained having a viscosity of 113 poise.

Unsaturated polymer (E) with triple bond in the side chain

To 600g of methyl ethyl ketone solution of phenoxy resin (a solution into which 200g of phenoxy resin and 400g of methyl ethyl ketone are disolved homogeneously) produced by the EXAMPLE 1, were added 120g of unsaturated isocyanate (50% methyl ethyl ketone solution) produced by reacting 67g of propargyl alcohol with 222g of isophorone diisocyanate and 1g of dibutyltin dilaurate, and allowed to undergo reaction at 65-70°C till the disappearance of the isocyanate group was confirmed by infrared spectrophotometric analysis.

A light yellowish brown polymer with a viscocity of 34 poise having triple bond at the side chain was obtained.

A photo-curing solder resist ink was prepared according to the following composition.

| | |
|---|---|
| unsaturated polymer (E) (methyl ethyl ketone solution) | 720g |
| ene/thiol addition product (D) | 155g |
| barium sulfate | 200g |
| phthalocyanine green | 2g |
| aerosil | 10g |
| Darocure #1173 | 10g |
| t-butyl perbenzoate | 5g |

This ink was coated on a paper/phenol substrate of copper laminated sheet by a bar coater to form coating with a thickness of 1000μm, then after air-drying the coating at 80-90°C for 10 min., it was passed at a rate of 1.5m/min. 10cm beneath 3 ultraviolet radiation lamps with an output of 120W/cm a lamp.

The physical properties of the resist coating obtained were as follows:

| | |
|---|---|
| adhesion of coating (cell test) | 100/100 |
| coating hardness | 2H-3H |
| 260°C-soldering heat resistance | 60sec. acceptable |
| 260°C-flux soldering resistance | 60sec. acceptable |
| insulating properties | at least $10^{13}$ ohm |

EXAMPLE 4

Preparation of Ethylidene norbornene/trimethylolpropane trithioglycolate addition product (F)

Into a 1-liter separable flask equipped with stirrer, reflux condenser, thermometer, gas introducing tubing were placed 712g of trimethylolpropane trithioglycolate and 120g of ethylidene norbornene, and the moment when the mixture was homogeneously stirred, reaction started with exothermic heat.

Cooling the mixture so as to prevent the temperature from going up to over 40°C, and after the completion of exothermic change, reaction was continued at 60-65°C for 2 hours resulting in complete elimination of both the characteristic odor of thiol and the odor of ethylidene norbornene.

Substantially no residual unsaturated bond was recognized from the results of NMR analysis.

After adding 0.2g of methyl-p-benzoquinone thereto, a light yellowish brown addition product (F) having a viscisity of 134 poise was produced.

Synthesis of polyester resin (G) using itaconic acid

Into a 2-liter separable flask equipped with stirrer, reflux condenser, thermometer, gas introducing tubing were placed 130g of itaconic acid, 146g of adipic acid, 216g of endomethylenetetrahydrophthalic anhydride, 320g of diethyleneglycol, 40g of trimethylolpropane and 0.4g of hydroquinone, and esterfication was conducted at 170-180 °C in an atomosphere of nitrogen to obtain a polyester having an acid value of 39.1 and a hydroxyl value of 50.6. Further, 0.8g of adipic acid was added thereto, and the reaction was conducted at 170-175 °C for 1 hour resulting in substantial elimination of hydroxyl value and production of a light yellowish syrupy unsaturated polyester (G) with an acid value of 97.4. The molecular weight thereof was about 2,000.

| | |
|---|---|
| addition product (F) | 50 parts |
| polyester resin (G) | 50 parts |
| epoxy resuin (tetrad-X made by Mitsubishi Gas Chemical Co., Ltd.) | 30 parts |
| t-butyl-p-benzoate | 3 parts |
| 2-ethyl-4-methylimidazole | 3 parts |

The mixture specified above was homogeneously kneaded, and then applied to a thickness of 30μ between a 35μ thickness of copper foil and a 50μ thickness of polyimide film to be bonded together. The obtained specimens were heat-cured at 120 °C for 2 hours to begin with, then 150 °C for 6 hours.

After cooling the specimens to room temperature, a 180-degree of peel strength was measured to obtain a strength of 1.8-2.1kg/cm, and the soldering resistance at 260 °C for 60 sec. was admissible.

EXAMPLE 5

Synthesis of polyester/acrylate (H)

Into a 1-liter separable flask equipped with stirrer, reflux condenser, thermometer, gas introducing tubing were placed 148g of phthalic anhydride, 140g of glycidyl methacrylate, 3g of ethylene glycol, 1.5g of triphenylphosphine and 0.12g of hydroquinone, and the mixture was allowed to undergo chemical reaction at 130-135 °C with vigorous agitation by steam blowing for 3 hours to obtain an acid value of 21.8, then 110g of ethylene glycol dimethacrylate was added for additional reaction at 110-120 °C for 2 hours.

The final acid value was 14.0 on solid content basis. The peak of molecular weight by GPC was about 2,400.

Additional charge of 100g of ethylene glycol dimethacrylate formed a light yellowish polyester acrylate (H) having a viscosity of 28.1 poise.

Into 100 parts of polyester/acrylate (H) were homogeneously dissolved 130 parts of the addition product (A) used in EXAMPLE 1, 3.5 parts of Darocure #1173 and 2.5 parts of Percadox #16 by Kayaku Nuri Co., Ltd., and the solution was poured into a 3mm-gap of glass plates treated with releasing agent. After radiating the solution through the glass plates from both sides thereof with a 250W sunlamp for 1 hour, it was cured at 70 °C for 2 hours.

The resin poured was cured resulting in a Rockwell hardness M of 95 and a bending strength of 12.1-13.7g/mm$^2$.

Curable resin compositions according to this invention are odorless and excellent in heat resistance, adhesion properties and mechanical strength compared with conventional polyene/polythiol type of resins, therefore, they are unexpectedly useful in the applications for paint, coating, adhesive agent and the like.

## Claims

1. A resin composition comprising:
(A) a polyene component comprising an oligomer or a polymer having at least two reactive carbon-carbon double bonds or at least one reactive carbon-carbon triple bond, and (B) an unsaturated alicyclic compound having a thiol group.

2. A composition according to claim 1 wherein said component (B) is a thiol component comprising an alicyclic compound having a thiol group in the molecule and said thiol component is obtained by reacting an unsaturated alicyclic compound having at least two unsaturated bonds in the molecule at least one of said unsaturated bonds being in the ring with a polythiol compound having at least two thiol groups at a

proportion where the total number of thiol groups of the polythiol compound is greater than the total number unsaturated bonds of the unsaturated alicyclic compound .

3. A composition according to claims 1 or 2 wherein said component (A) has a molecular weight of at least 1000.

4. A composition according to claims 1 or 2 wherein said unsaturated alicyclic compound is dicyclopentadiene.

European Patent Office

# EUROPEAN SEARCH REPORT

Application Number

EP 89 12 1983

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
| --- | --- | --- | --- |
| A | DATABASE CHEMICAL ABSTRACTS, (HOST:STN), 1989, no. 111(6):41505x, Columbus, Ohio, US; & JP-A-01 022 927 (JPN. KOKAI TOKKYO KOHO) 25-01-1989 * Abstract * ----- | 1-4 | C 07 C 321/22<br>C 08 F 299/00<br>C 08 F 32/08 |
| | | | TECHNICAL FIELDS SEARCHED (Int. Cl.5) |
| | | | C 08 F<br>C 07 C |

The present search report has been drawn up for all claims

| Place of search | Date of completion of the search | Examiner |
| --- | --- | --- |
| THE HAGUE | 23-04-1990 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)